# EUROPEAN PATENT APPLICATION

(11) **EP 4 678 881 A1**
(43) Date of publication of application: **14.01.2026**
(21) Application number: 24767459.1
(22) Date of filing: 08.03.2024
(51) Int. Cl.: F01N 3/08, F01N 5/02, F02G 5/02, F22B 1/18, F22B 37/06, F22D 1/40, F01K 23/10, F01N 3/04

(54) **CARBON DIOXIDE CAPTURE SYSTEM FOR SHIP**

(30) Priority: 08.03.2023 KR 20230030726; 18.07.2023 KR 20230093363; 07.03.2024 KR 20240032863; 07.03.2024 KR 20240032864
(71) Applicant: HD Korea Shipbuilding & Offshore Engineering Co., Ltd., Seongnam-si, Gyeonggi-do 13553 (KR)
(72) Inventor: PARK, Eun Ji, Seongnam-si, Gyeonggi-do 13553 (KR); HONG, Il Gu, Seongnam-si, Gyeonggi-do 13553 (KR); YOU, Won Woo, Seongnam-si, Gyeonggi-do 13553 (KR); KANG, Yong Hwan, Seongnam-si, Gyeonggi-do 13553 (KR); PARK, Sang Min, Seongnam-si, Gyeonggi-do 13553 (KR)
(74) Representative: Beck Greener LLP
(86) International application number: PCT/KR2024/003043
(87) International publication number: WO 2024/186172

(57) **Abstract**

A carbon dioxide capture system for a ship according to the present invention includes: a carbon dioxide capture device that removes carbon dioxide contained in exhaust gas of a main engine, a low-temperature steam generator that exchanges heat with exhaust gas of an auxiliary engine to generate steam, and a low-temperature steam supply line that supplies the steam generated from the low-temperature steam generator to the carbon dioxide capture device.

## Description

### [Technical Field]

The present application claims the benefits of priorities based on Korean Patent Application Nos. 10-2023-0030726 filed on March 08, 2023, 10-2023-0093363 filed on July 18, 2023, 10-2024-0032863 filed on March 07, 2024, and 10-2024-0032864 filed on March 07, 2024, the entire contents of which are incorporated as part of this specification.

The present invention relates to a carbon dioxide capture system for a ship, and more particularly, to a carbon dioxide capture system for a ship that generates low-temperature steam using waste heat of exhaust gas to heat an absorbent to a regeneration temperature and separates carbon dioxide.

### [Background Art]

Sea transportation accounts for approximately 80% of the world's trade volume and is the most economical and common means of transportation for long-distance cargo transportation. The engines of large cargo ships or cruise ships generally use heavy oil with high sulfur content. When the heavy oil with high sulfur content as described above is used as fuel, the exhaust gas contains a large amount of carbon dioxide (CO2) and sulfur dioxide (SO2), etc. These pollutants are not only harmful to the human body, but also cause environmental pollution when the pollutants are emitted into the atmosphere without filtration.

Accordingly, the UN has delegated the issue of regulating exhaust gas emissions from ships sailing over all the seas of the world to the International Maritime Organization (IMO), and the IMO is promoting various exhaust gas reduction measures with the goal of reducing the amount of environmental pollutant emissions from exhaust gas emitted from ships by 40% by 2030 and by 50% by 2050, compared to 2008.

In Korea, a mid-to-long-term roadmap has been established and research projects are being conducted to achieve the 2030 greenhouse gas reduction target presented by the IMO. Accordingly, the shipping and shipbuilding industries are demanding solutions to reduce emissions of carbon dioxide and sulfur dioxide, which are representative pollutants contained in exhaust gas, in order to develop eco-friendly ships through active technology development to reduce greenhouse gases generated from ships.

In order to remove carbon dioxide, the exhaust gas is passee through a carbon dioxide absorbent to remove the carbon dioxide in the exhaust gas. Since using new carbon dioxide absorbents each time increases costs, including disposal and shipping expenses, the carbon dioxide absorbents may be regenerated and reused.

However, when reusing the absorbent, the regeneration temperature of the absorbent is significantly different from the CO₂ absorption temperature, leading to additional CO₂ emissions during a heating process for absorbent regeneration and increased costs for absorbent heating.

### [Disclosure]

### [Technical Problem]

It is an object of the present invention to provide a carbon dioxide capture system for a ship capable of saving fuel consumed for absorbent regeneration by generating low-temperature steam using waste heat of exhaust gas in order to increase a temperature of an absorbent to a regeneration temperature of a carbon dioxide absorbent.

It is another object of the present invention to improve efficiency of a carbon dioxide absorption process by lowering a temperature of exhaust gas used in a carbon dioxide absorption process.

It is yet another object of the present invention to provide a carbon dioxide capture system for a ship that is suitable for an amine-based absorbent by enabling the supply of low-temperature steam to a reboiler, thereby preventing the performance deterioration of the amine-based absorbent due to high temperature.

It is still another object of the present invention to provide a carbon dioxide capture system for a ship that generates low-temperature steam using waste heat of high-temperature exhaust gas from a methane oxidation catalyst reactor, thereby saving fuel consumed for absorbent regeneration.

### [Technical Solution]

According to an embodiment of the present invention, a carbon dioxide capture system for a ship includes: a carbon dioxide capture device that removes carbon dioxide contained in exhaust gas of a main engine; a low-temperature steam generator that exchanges heat with exhaust gas of an auxiliary engine to generate steam; and a low-temperature steam supply line that supplies the steam generated from the low-temperature steam generator to the carbon dioxide capture device.

According to an embodiment of the present invention, the carbon dioxide capture system may further include: a methane oxidation catalyst reactor that is provided between the auxiliary engine and the low-temperature steam generator to remove methane contained in the exhaust gas of the auxiliary engine, in which the low-temperature steam generator may exchange heat with the exhaust gas passing through the methane oxidation catalyst reactor to generate the steam.

According to an embodiment of the present invention, the low-temperature steam supply line may be provided with a steam tank for separating liquid water within the steam.

According to an embodiment of the present invention, the low-temperature steam generator may be a sub-economizer, and the steam may be low-temperature steam having a temperature condition of 100°C or higher and less than 165°C under a pressure condition of less than 6 barg.

According to an embodiment of the present invention, the carbon dioxide capture system may include a first steam valve that is provided on the low-temperature steam supply line and controls the amount of steam supplied to the carbon dioxide capture device.

According to an embodiment of the present invention, the carbon dioxide capture system may include: a main economizer that exchanges heat with the exhaust gas of the main engine to generate main steam; a boiler that receives the main steam preheated by the main economizer to generate high-temperature boiler steam; and a second steam valve that is provided on an additional supply line supplying the high-temperature boiler steam generated from the boiler to the carbon dioxide capture device to convert the high-temperature boiler steam into low-temperature steam.

According to an embodiment of the present invention, the carbon dioxide capture system may further include: a main economizer that is provided on a main engine exhaust line connecting between the main engine and the carbon dioxide capture device, and exchanges heat with the exhaust gas of the main engine to generate main steam; a second low-temperature steam generator that is provided on the main engine exhaust line at a rear end of the main economizer, and exchanges heat with the exhaust gas of the main engine passing through the main economizer to generate second steam; and a second low-temperature steam supply line that supplies the second steam generated from the second low-temperature steam generator to the carbon dioxide capture device.

According to an embodiment of the present invention, the main engine or the auxiliary engine may use dual fuel.

According to an embodiment of the present invention, a carbon dioxide capture system for a ship includes: a carbon dioxide capture device that removes carbon dioxide contained in exhaust gas of a main engine; a main economizer that exchanges heat with the exhaust gas of the main engine to generate main steam; a composite low-temperature steam generator that receives the exhaust gas of the main engine passing through the main economizer and the exhaust gas of the auxiliary engine together to generate steam; and a low-temperature steam supply line that supplies the steam generated from the composite low-temperature steam generator to the carbon dioxide capture device.

According to an embodiment of the present invention, the carbon dioxide capture system may further include: a boiler that receives the main steam preheated by the main economizer to generate high-temperature boiler steam, wherein at least a portion of exhaust gas of a boiler generated from the boiler may be supplied to the composite low-temperature steam generator.

According to an embodiment of the present invention, a carbon dioxide capture system for a ship includes: a carbon dioxide capture device that removes carbon dioxide contained in exhaust gas of a main engine; a low-temperature steam generator that exchanges heat with exhaust gas of an auxiliary engine to generate steam; and a low-temperature steam supply line that supplies the steam generated from the low-temperature steam generator to the carbon dioxide capture device, wherein at least a portion of the exhaust gas of the auxiliary engine passing through the low-temperature steam generator is joined to a main engine exhaust line connecting between the main engine and the carbon dioxide capture device.

The carbon dioxide capture system may further include: a main economizer that is provided on the main engine exhaust line, and exchanges heat with the exhaust gas of the main engine to generate main steam, in which at least a portion of the exhaust gas of the auxiliary engine passing through the low-temperature steam generator may be joined to the main engine exhaust line at a rear end of the main economizer.

According to an embodiment of the present invention, the carbon dioxide capture system may further include: a boiler that receives the main steam preheated by the main economizer to generate high-temperature boiler steam, wherein at least a portion of the exhaust gas of the boiler generated from the boiler may be joined to the main engine exhaust line at the rear end of the main economizer.

According to an embodiment of the present invention, the carbon dioxide capture system may include: a main economizer that is provided on the main engine exhaust line, and exchanges heat with the exhaust gas of the main engine to generate main steam; and a branch line that is branched from the main engine exhaust line at the rear end of the main economizer and connected to an auxiliary engine exhaust line connecting between the auxiliary engine and the low-temperature steam generator, wherein at least a portion of the main engine exhaust gas passing through the main economizer may be supplied to the low-temperature steam generator through the branch line.

According to an embodiment of the present invention, the main engine or the auxiliary engine may use liquid fuel.

### [Advantageous Effect]

According to the present invention, low-temperature steam is generated by using waste heat of exhaust gas to raise a temperature of a carbon dioxide absorbent to a regeneration temperature, thereby saving fuel consumed for absorbent regeneration.

In addition, it is possible to reduce carbon dioxide additionally generated for carbon dioxide capture.

In addition, by lowering the temperature of exhaust gas used in the carbon dioxide absorption process, it is possible to improve the efficiency of a carbon dioxide absorption process.

In addition, by supplying low-pressure steam to a reboiler, it is possible to prevent an absorbent from deteriorating in performance due to high temperature.

In addition, by generating low-temperature steam using waste heat of high-temperature exhaust gas generated from a methane oxidation catalyst reactor in order to raise the temperature of the absorbent to the regeneration temperature of the carbon dioxide absorbent, it is possible to save fuel consumed for absorbent regeneration.

### [Description of Drawings]

FIG. 1 is a diagram illustrating a carbon dioxide capture system for a ship according to a first embodiment of the present invention.
FIG. 2 is a diagram illustrating a carbon dioxide capture device for a ship according to a first embodiment of the present invention.
FIG. 3 is a table illustrating a loss rate according to a temperature of an amine-based absorbent.
FIG. 4 is a table illustrating a saturated steam condition.
FIG. 5 is a diagram illustrating a steam-water circulation path of the carbon dioxide capture system for a ship according to the first embodiment of the present invention.
FIG. 6 is a diagram illustrating a carbon dioxide capture system for a ship according to a second embodiment of the present invention.
FIG. 7 is a diagram illustrating a carbon dioxide capture system for a ship according to a third embodiment of the present invention.
FIG. 8 is a diagram illustrating a carbon dioxide capture system for a ship according to a fourth embodiment of the present invention.
FIG. 9 is a diagram illustrating a carbon dioxide capture system for a ship according to a fifth embodiment of the present invention.
FIG. 10 is a diagram illustrating a carbon dioxide capture system for a ship according to a sixth embodiment of the present invention.
FIG. 11 is a diagram illustrating a carbon dioxide capture system for a ship according to one of optimal embodiments of the present invention.
FIG. 12 is a diagram illustrating a carbon dioxide capture system for a ship according to another one of optimal embodiments of the present invention.

### [Best Mode]

Hereinafter, some embodiments of the present invention will be described in detail with reference to exemplary drawings. It is to be noted that in giving reference numerals to components of each drawing, the same components will be denoted by the same reference numerals as much as possible even though they are shown in different drawings. Further, in describing the embodiments of the present invention, if it is determined that a detailed description of a related known configuration or function hinders the understanding of the embodiment of the present invention, the detailed description thereof will be omitted.

In addition, the terms such as first, second, A, B, (a), (b) may be used in describing the components of the embodiment of the present invention. These terms are intended only to distinguish the components from other components, and do not limit the nature, order, or sequence of the corresponding component. When a component is described as being "connected", "coupled", or "linked" to other component, it is to be understood that the component may be directly connected or linked to the other component, but another component may also be "connected", "coupled", or "linked" between each component.

In this specification, the forward/backward, left/right, and up/down directions are referred to for convenience of description, and may be directions orthogonal to each other.

### <First Embodiment>

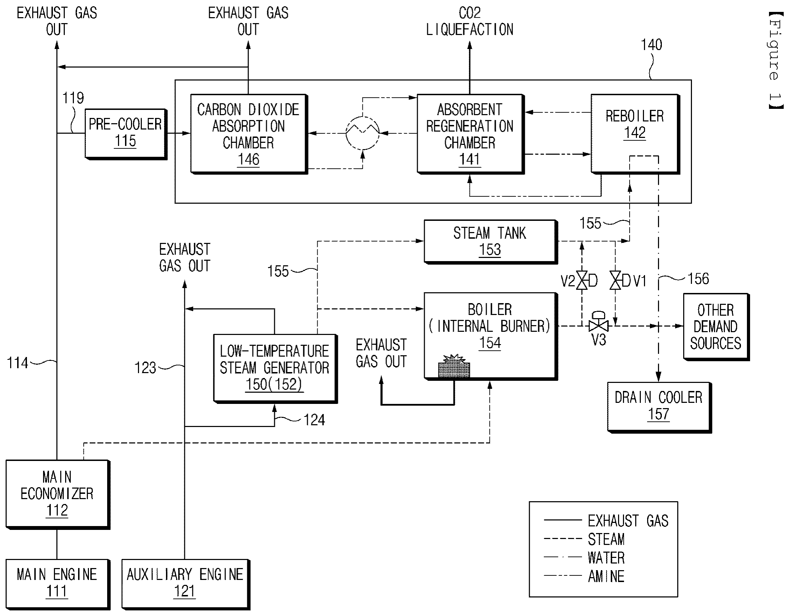

FIG. 1 is a diagram illustrating an exhaust gas treatment device including a carbon dioxide capture system for a ship according to a first embodiment of the present invention. The carbon dioxide capture system for a ship includes: a carbon dioxide capture device 140 that removes carbon dioxide contained in exhaust gas of a main engine 111; a low-temperature steam generator 150 that exchanges heat with exhaust gas of an auxiliary engine 121 to generate steam; and a low-temperature steam supply line 155 that supplies the steam generated from the low-temperature steam generator 150 to the carbon dioxide capture device 140.

Exhaust gas emitted from ship engines 111 and 121 contains air pollutants such as nitrogen oxides (NOx), sulfur oxides (SOx), and carbon dioxide (CO₂) and greenhouse gases. In order to reduce the pollutants in the exhaust gas, there is a method of lowering a sulfur content in fuel based on the use of alternative fuels such as methanol, liquefied natural gas (LNG), and emulsified fuel instead of diesel as a pretreatment method to reduce nitrogen oxides, sulfur oxides, and particle matter (PM) emissions.

Each pollutant may be removed through a process of removing each pollutant by a post-treatment method. The carbon dioxide capture system for a ship may include a nitrogen oxide absorption unit (not illustrated) for removing nitrogen oxides, a sulfur oxide removal unit (not illustrated) for removing sulfur oxides (SOx), and a carbon dioxide capture device 140 for removing carbon dioxide.

The generated pollutants may vary depending on the type of fuel supplied to the ship engines 111 and 121, and all the nitrogen oxide absorption unit, and the sulfur oxide absorption unit, and the carbon dioxide capture device 140 may be included or may be partially omitted.

The nitrogen oxide absorption unit may remove the nitrogen oxides in the exhaust gas by supplying an absorbent liquid such as ammonia (NH₃) into the chamber. FIG. 1 does not illustrate the nitrogen oxide absorption unit, but the exhaust gas passing through the nitrogen oxide removal unit may be supplied to the sulfur oxide removal unit.

The sulfur oxide removal unit for reducing emissions of industrially emitted sulfur oxides (SOx) has been used on land for about 100 years, but was only installed on ships about 30 years ago. In the case of ships, there is a difference from an on-land scrubber due to space constraints.

The sulfur oxide (SOx) in the exhaust gas is an acidic substance, so an alkaline substance may be used as a sulfur oxide absorbent to neutralize the sulfur oxide (Sox), or seawater, which is a natural alkaline substance, may be used as a sulfur oxide absorbent. Due to bicarbonate in seawater, seawater exhibits weak alkalinity, and seawater containing bicarbonate has a solubility of sulfur oxide (SOx) about 2 to 3 times higher than that of fresh water.

The seawater (SW) is introduced into a ship and sprayed into the chamber of the sulfur oxide removal unit to which the exhaust gas is supplied. The seawater reacts with sulfur oxides (SOx), such as sulfur dioxide (SO₂) or sulfur trioxide (SO₃), in the exhaust gas and is converted into sulfurous acid (H₂SO₃) or sulfuric acid (H₂SO₄) aqueous solution.

The water discharged from the sulfur oxide removal unit contains sulfuric acid or sulfurous acid, and thus, has high acidity and contains pollutants other than sulfuric acid and sulfurous acid, so a water treatment system may be further included to control the acidity and remove pollutants before disposing of the discharged water in the sea.

On the other hand, carbon dioxide (CO₂) is not dissolved in seawater compared to sulfuric acid, and thus, passes through the sulfur oxide removal unit, but the exhaust gas still has a high carbon dioxide (CO₂) content, and thus, needs to be removed using a carbon dioxide absorbent.

To remove the carbon dioxide, a carbon dioxide absorbent that reacts with the carbon dioxide is required. The carbon dioxide absorbent contains amino acids with amine groups, amino acid mimics containing amine and carboxyl groups, alkali metal salts thereof, etc. When these substances are dissolved in water with a catalyst and pass through carbon dioxide, these substances may combine with carbon dioxide to generate byproducts.

However, in order to store or process the absorbent that has captured the carbon dioxide, separate storage space and processing costs are consumed. The absorbent may be regenerated and recycled, but since the regeneration temperature of the absorbent is very different from the absorption temperature of the carbon dioxide, heat is required to regenerate the absorbent. When the fuel of the boiler is used for heat for absorbent regeneration, there is a problem in that carbon dioxide is additionally generated, and the cost for the absorbent regeneration increases.

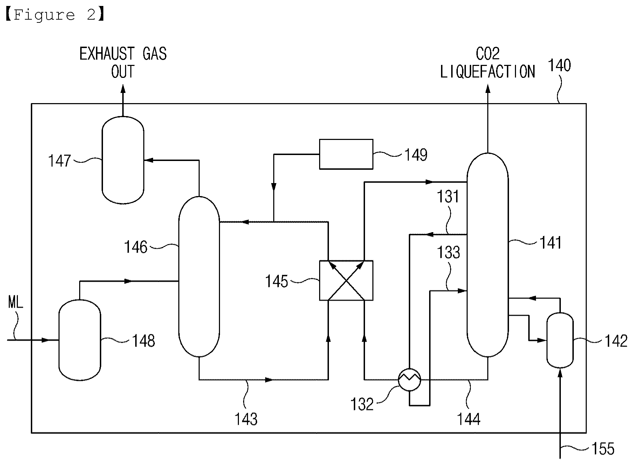

Referring to FIG. 2, the carbon dioxide capture device 140 of the present invention will be described. The carbon dioxide capture device 140 may include a supply gas cooler 148 that cools the exhaust gas to an absorption temperature required for carbon dioxide absorption, a carbon dioxide absorption chamber 146 to which a carbon dioxide absorbent supplied from an absorbent tank 149 and exhaust gas temperature-controlled through the supply gas cooler 148 are supplied, an absorbent regeneration chamber 141 in which the absorbent is regenerated, a reboiler 142 that supplies heat for the absorbent regeneration, and an exhaust gas washing unit 147 that washes exhaust gas discharged from the carbon dioxide absorption chamber 146.

The supply gas cooler 148 may be further provided in the carbon dioxide capture device 140 separately from the pre-cooler 115 illustrated in FIG. 1. Alternatively, only one of the pre-cooler 115 and the supply gas cooler 148 may be provided. In order to increase carbon dioxide absorption efficiency, the exhaust gas supplied along a main engine exhaust line ML connecting between the main engine 111 and the carbon dioxide capture device 140 may be introduced into the supply gas cooler 148 and adjusted to a required absorption temperature (for example, about 30 to 40°C for amine-based absorbents) depending on the type of carbon dioxide absorbent. However, in some cases, only one of the pre-cooler 115 and the supply gas cooler 148 may exist, so there is no limitation to the number of coolers.

The carbon dioxide absorption chamber 146 includes an exhaust gas injection port into which exhaust gas containing carbon dioxide is introduced, an absorbent supply unit into which the regenerated carbon dioxide absorbent is supplied, a drain port through which a waste absorbent that has absorbed carbon dioxide is discharged and introduced into the absorbent regeneration chamber 141, and an exhaust gas outlet through which the exhaust gas from which the carbon dioxide is removed is discharged.

The exhaust gas injection port is located at a lower end portion of a side surface of the carbon dioxide absorption chamber 146, and the exhaust gas outlet is located at the upper side, so that exhaust gas may move from a lower portion toward an upper portion of the carbon dioxide absorption chamber 146.

The carbon dioxide absorption chamber 146 may include an injection unit that injects the absorbent into the inside. The injection unit includes a nozzle that injects the absorbent in the form of fine particles and supplies the absorbent to the exhaust gas inside the carbon dioxide absorption chamber 146.

The absorbent may be an amine-based absorbent and may contain at least one of Mono Ethanol Amine (MEA), Methyl Diethanol Amine (MDEA), Diethanol Amine (DEA), and Diglycol Amin (DGA) . Only representative amine-based absorbents are mentioned, and other types of amine-based absorbents may also be used.

The amine-based absorbent has an excellent carbon dioxide absorption rate in a temperature range of about 30 to 40°C. Therefore, it is desirable to maintain the temperature (absorption temperature) in the carbon dioxide absorption chamber 146 of the carbon dioxide capture device 140 at about 30 to 40°C. For this purpose, the supply gas cooler 148 described above may be used.

The injection unit may be located on the upper side of the carbon dioxide absorption chamber 146. By injecting the absorbent from the upper side of the carbon dioxide absorption chamber 146, an area in contact with the exhaust gas may be maximized.

After removing the carbon dioxide in the absorbent regeneration chamber 141, the exhaust gas from which the carbon dioxide has been removed may be discharged into the air after having pollutants washed once more with water in the exhaust gas washing unit 147.

In addition, the carbon dioxide in the exhaust gas may be supplied to the absorbent regeneration chamber 141 through the drain port located at the lower portion of the carbon dioxide absorption chamber 146 while being dissolved by the absorbent.

In order to separate the carbon dioxide in the absorbent, the absorbent regeneration chamber 141 heats the absorbent at high temperature to vaporize and separate the carbon dioxide in the absorbent. The regeneration temperature at which the carbon dioxide is separated in the absorbent regeneration chamber 141 is approximately 100 to 120°C, which is a temperature difference of 60°C or higher from the absorption temperature (30 to 40°C). Therefore, the external heat supply is required for the absorbent regeneration, and the absorbent may be heated through the reboiler 142. However, additional carbon dioxide may be generated during the combustion process of the reboiler 142, and the problem of overall system efficiency deterioration may occur depending on the amount of reboiler 142 used.

In order to compensate for the difference between the absorption temperature and the regeneration temperature, the temperature difference between the two chambers 146 and 141 may be compensated through an absorbent heat exchanger 145 that exchanges heat between the absorbent recovery line 143 that absorbs carbon dioxide in the carbon dioxide absorption chamber 146 and supplies the carbon dioxide to the absorbent regeneration chamber 141 and the absorbent supply line 144 that supplies the absorbent regenerated in the absorbent regeneration chamber 141 to the carbon dioxide absorption chamber 146.

That is, the temperature may be compensated through the heat exchange between the low-temperature absorbent passing through the absorbent recovery line 143 and the high-temperature absorbent passing through the absorbent supply line 144, and the temperature of the absorbent supplied to the absorbent regeneration chamber 141 may be increased to a level of 70 to 90°C.

However, even if heat is exchanged in the absorbent heat exchanger 145, it is difficult to meet the regeneration temperature required in the absorbent regeneration chamber 141, so the absorbent regeneration chamber 141 may use the reboiler 142 to raise the absorbent to the regeneration temperature. The reboiler 142 heats the absorbent to the regeneration temperature using steam. The saturated steam state is used to maximize the energy of the steam. The steam supplied to the reboiler 142 may use steam above the regeneration temperature so that the absorbent of 70 to 90°C supplied to the absorbent regeneration chamber 141 may be raised to the regeneration temperature of 100 to 120°C. Considering the temperature increase efficiency, the higher the temperature of the steam, the faster the temperature of the absorbent may be raised.

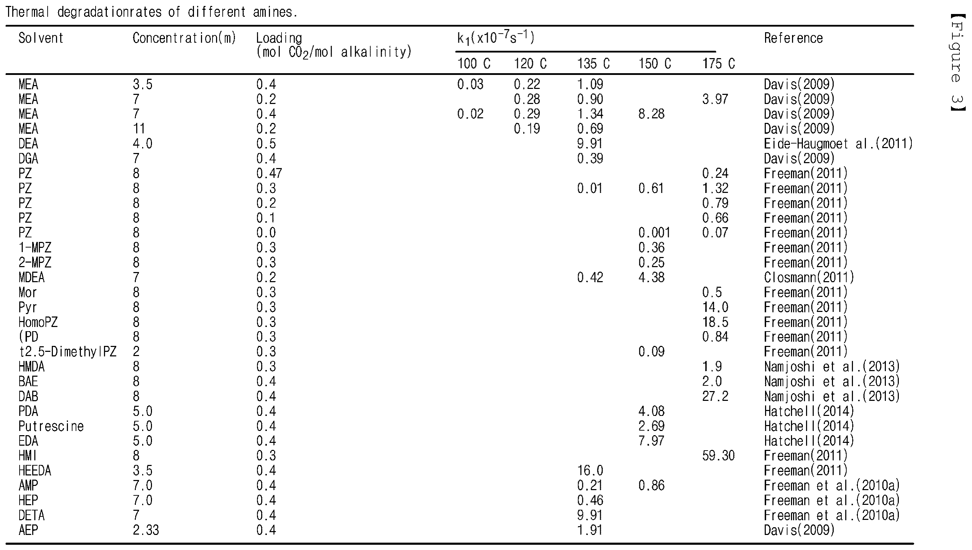

However, the amine-based absorbent undergoes denaturation at high temperature, so it is difficult to reuse after a certain period of time and thus needs to be replaced. Therefore, when the steam heated in the reboiler 142 is too high temperature, the modification of the absorbent may be accelerated. FIG. 3 is a graph illustrating a rate at which the amine-based absorbent is denaturalized and lost depending on the temperature. The absorbent may contain components such as Mono Ethanol Amine (MEA), Methyl Diethanol Amine (MDEA), Diethanol Amine (DEA), and Diglycol Amin (DGA), and may exhibit different characteristics depending on the ratio.

The loss rate varies depending on the type and mixing ratio of the absorbent, but the loss occurs from about 120 to 150°C, and the loss of most absorbents increases significantly at 150 to 175°C or higher.

Therefore, it is preferable to use low-temperature steam of 100°C or higher and less than 165°C for absorbent heating efficiency and absorbent loss prevention as the temperature of the absorbent supplied to the reboiler 142.

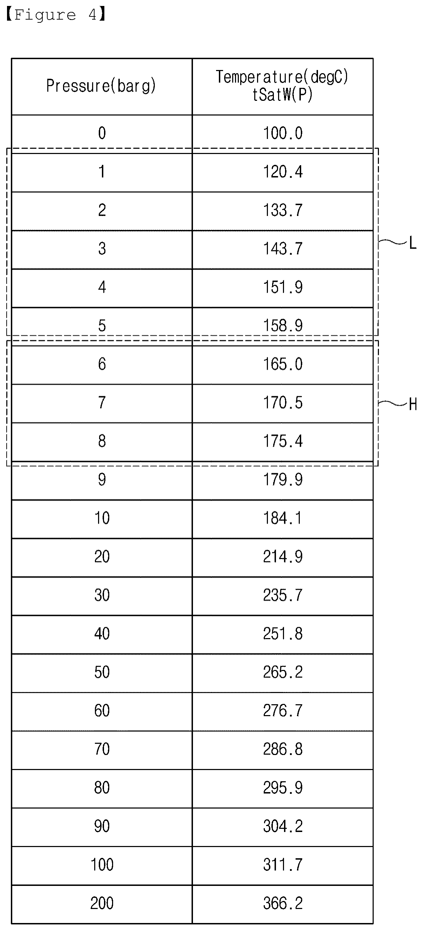

FIG. 4 is a table illustrating saturated steam conditions, and the temperature for forming saturated steam at a specific pressure may be confirmed. In order to form the saturated steam in the above-described regeneration temperature range, low-temperature steam having a temperature range of 100°C or higher and less than 165°C may be generated under a pressure condition of less than 6 barg. Preferably, saturated steam L having a temperature range of 134°C to 152°C may be used under a pressure of 2 to 4 barg.

The higher the temperature of the steam, the greater the energy storage capacity, so a large amount of energy may be transferred with a small amount of steam and a size of a pipe may be reduced. Therefore, steam of 165°C or higher and 6 barg or higher is generally used as steam provided by an onboard boiler, and since this is relatively high temperature compared to the steam required for the absorbent regeneration, it is referred to as high-temperature steam. In addition, the steam required for the absorbent regeneration is generally relatively low temperature compared to the steam provided from the onboard boiler, and is therefore referred to as low temperature steam.

However, when the high temperature steam generated from the existing boiler is used for the absorbent regeneration, the absorbent may be exposed to a temperature of 165°C or higher, which may increase the loss rate of the absorbent. The present invention may generate low temperature steam to extend the life of the absorbent by lowering the absorbent loss rate while using the waste heat of the exhaust gas, and supply the low temperature steam to the reboiler 142 of the carbon dioxide capture device 140 through the low temperature steam supply line 155. The low temperature steam supply line 155 is defined as a piping line connecting the low temperature steam generator 150 to the reboiler 142 of the carbon dioxide capture device 140.

In order to improve the efficiency in the absorbent regeneration chamber 141, at least a portion of the carbon dioxide-containing absorbent introduced from the upper portion of the absorbent regeneration chamber 141 may be branched off through the regeneration branch line 131, and after heat is exchanged with the relatively high-temperature regenerated absorbent in the absorbent supply line 144 in the regeneration heat exchanger 132, may be re-supplied to the absorbent regeneration chamber 141 through the re-supply line 133.

The carbon dioxide gas separated in the absorbent regeneration chamber 141 may be stored or used at a necessary location after going through a carbon dioxide liquefaction process.

Referring back to FIG. 1, steam is generated by exchanging heat with the exhaust gas of the auxiliary engine 121 in the low-temperature steam generator 150, and the steam generated from the low-temperature steam generator 150 is supplied to the reboiler 142 of the carbon dioxide capture device 140 through the low-temperature steam supply line 155. The temperature of the exhaust gas of the main engine 111 is about 250°C, and the temperature of the exhaust gas of the auxiliary engine 121 is 300 to 400°C, so it is most desirable in terms of energy efficiency to utilize the waste heat of the exhaust gas of the auxiliary engine 121. Therefore, the low-temperature steam generator 150 uses the exhaust gas of the auxiliary engine 121.

The low-temperature steam generator 150 may be a sub-economizer 152 that generates low-temperature steam by using the waste heat of the exhaust gas of the auxiliary engine 121.

The main engine 111 is the main power source for the operation of the ship, and the auxiliary engine 121 is a power generation engine that is independently driven of the main engine 111 and supplies electric power to the ship in addition to the main engine. Since the auxiliary engine 121 does not emit much exhaust gas compared to the main engine 111, the exhaust gas treatment process for removing substances such as carbon dioxide or sulfur dioxide in the exhaust gas may be omitted depending on the type of fuel. For example, in the case of a ship using LNG as fuel or a dual fuel (gas/diesel) ship, the exhaust gas of the auxiliary engine 121 may be emitted into the atmosphere independently from the exhaust gas of the main engine 111.

The waste heat of the exhaust gas of the auxiliary engine 121 may be used to generate the low-temperature steam from the sub-economizer 152. The low-temperature steam generated from the sub-economizer 152 may have a temperature range of 100°C or higher and less than 165°C under a pressure of less than 6 barg. FIG. 1 illustrates that the exhaust gas generated from the auxiliary engine 121 is branched from the exhaust gas discharge pipe 123 and supplied to the sub-economizer 152 through the exhaust gas supply pipe 124, but the sub-economizer 152 may be provided on the exhaust gas discharge pipe 123, and thus is not limited to the matters illustrated in FIG. 1.

The low-temperature steam generated from the sub-economizer 152 may pass through the steam tank 153. Since the efficiency is reduced when water is mixed in the steam, the liquid water may be removed from the steam tank 153, and only the saturated steam after the water is removed may be supplied to the reboiler 142. The steam tank 153 may be provided on the low-temperature steam supply line 155.

The high-temperature steam may be generated from the main economizer 112 and the boiler 154 by using the waste heat of the exhaust gas generated when the main engine 111 is driven. The main economizer 112 increases the temperature of water by using the waste heat of the main engine 111, and the boiler 154 may generate the high-temperature steam by using the steam/water preheated in the main economizer 112. The high-temperature steam generated from the boiler 154 may be supplied to other demand sources in the ship. In addition, the high-temperature steam of the boiler 154 may be converted into the low-temperature steam by lowering the temperature and supplied to the reboiler 142. This will be described later while referring to a second steam valve V2.

After generating high-temperature steam from the main economizer 112, the temperature of the exhaust gas discharged through the exhaust gas discharge pipe 114 is still high, so it may be cooled to the absorption temperature in the pre-cooler 115 and then supplied to the carbon dioxide capture device 140. The higher the temperature of the exhaust gas supplied to the pre-cooler 115, the more heat is wasted and the greater the amount of seawater needs to be supplied, which also causes energy loss, so a method for recycling this will be described later.

FIG. 1 illustrates that the exhaust gas generated from the main engine 111 is branched from the exhaust gas discharge pipe 114 and supplied to the carbon dioxide capture device 140 through the exhaust gas supply pipe 119. However, the carbon dioxide capture device 140 may be provided on the exhaust gas discharge pipe 114, and thus is not limited to the matters illustrated in FIG. 1.

The first embodiment may be applied to a case where the main engine 111 or the auxiliary engine 121 uses dual fuel (gas/diesel), but is not limited thereto. In the first embodiment, the low-temperature steam may be generated by using the waste heat of the exhaust gas of the auxiliary engine 121 and used for the absorbent regeneration. In the first embodiment, at least a portion of the exhaust gas of the main engine 111 may be supplied to the carbon dioxide capture device 140.

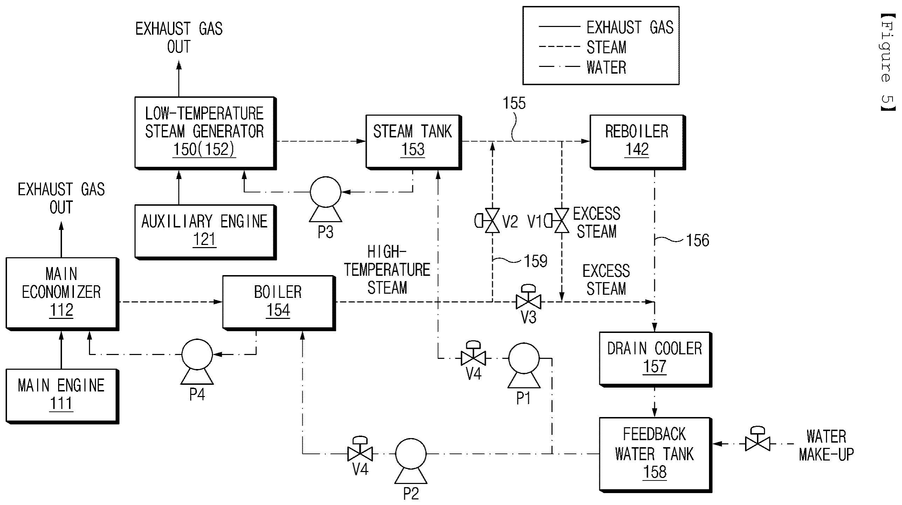

FIG. 5 is a diagram illustrating a steam-water circulation path of the carbon dioxide capture system for a ship according to the first embodiment of the present invention. The steam-water circulation path may be applied equally to all other embodiments.

The heat capacity of exhaust gas generated from the auxiliary engine 121 may vary depending on the temperature of the atmosphere, the characteristics of the fuel, and the amount of electricity used according to the ship's operating conditions.

The amount of steam generated from the sub-economizer 152 may be greater than the amount of steam required from the reboiler 142. In order to prevent excessive supply of steam, a first steam valve V1 may be included to bypass and discharge excess steam supplied from the steam tank 153 to the reboiler 142. The first steam valve V1 is provided on the low-temperature steam supply line 155 and may control the amount of steam supplied to the reboiler 142 of the carbon dioxide capture device 140. The first steam valve V1 may be in the form of a 3-way valve. The first steam valve V1 may be arranged at the position illustrated in FIG. 1, and there is no limitation on the arrangement position. The excess steam generated from the sub-economizer 152 is supplied to the drain cooler 157 through the first steam valve V1 to be liquefied, stored in the feedback water tank 158, and then supplied to the boiler 154 or the steam tank 153 if necessary. In addition, the excess steam generated from the sub-economizer 152 may be supplied to and used by other demand sources.

Meanwhile, when the amount of steam generated from the sub-economizer 152 is small compared to the heat capacity required by the reboiler 142, the boiler 154 may be used to additionally supply steam. The boiler 154 may be a dedicated boiler 154 for the reboiler 142, or may be a boiler 154 that supplies high-temperature steam to other devices in the ship. The boiler 154 may generate steam by burning additional fuel independently of the engine. In addition, the boiler 154 may generate high-temperature boiler steam by receiving preheated main steam from the main economizer 112. However, as described above, when high-temperature steam of 165°C or higher is used for the absorbent regeneration as it is, the loss rate of the absorbent may increase, so a second steam valve V2 for converting the high-temperature boiler steam into the low-temperature steam may be included.

The high-temperature boiler steam of 165°C or higher generated from the boiler 154 is converted into the low-temperature steam having a temperature range of 100°C or higher and less than 165°C under a pressure condition of less than 6 barg while passing through the second steam valve V2. Preferably, it is converted into low-temperature steam having a temperature range of 134°C to 152°C under a pressure of 2 to 4 barg.

In FIG. 5, the second steam valve V2 is provided on an additional supply line 159 connecting between the boiler 154 and the low-temperature steam supply line 155, but is not limited thereto. For example, the additional supply line 159 may be defined as a pipeline that directly connects the boiler 154 and the reboiler 142 of the carbon dioxide capture device 140. That is, the low-temperature steam supply line 155 through the sub-economizer 152 and the additional supply line 159 through the boiler 154 may each be connected to the reboiler 142, or may be combined and connected as one line.

In addition, when the amount of steam generated from the boiler 154 and converted into low-temperature steam is greater than the amount of steam required in the reboiler 142, the excess steam generated from the boiler 154 may be discharged to the drain cooler 157 through the third steam valve V3. In addition, the excess steam generated from the boiler 154 may be supplied to and used by other demand sources.

The low-temperature steam supplied with heat from the reboiler 142 to the absorbent may be liquefied into water and may include a water recovery line 156 for recovering the liquefied water. Referring to the steam-water circulation path of FIG. 5, the excess steam generated from the sub-economizer 152 may be supplied to the drain cooler 157 through the first steam valve V1 and liquefied, and the excess steam generated from the boiler 154 may be supplied to the drain cooler 157 through the third steam valve V3 and liquefied. The water stored in the feedback water tank 158 may be supplied to the boiler 154 or the steam tank 153 if necessary.

The amount of water supplied to the steam tank 153 and the boiler 154 from the feedback water tank 158 may be controlled through feed water pumps P1 and P2, respectively. Water may be supplied through circulation pumps P3 and P4 to ensure a stable water supply to the main economizer 112 and the sub-economizer 152. The water supplied to the steam tank 153 or separated from the steam may be supplied to the sub-economizer 152 through the first circulation pump P3. The water from the boiler 154 may be supplied to the main economizer 112 through the second circulation pump P4.

Instead of directly supplying water from the feedwater tank 158 to the sub-economizer 152 or the main economizer 112, water is supplied to the steam tank 153 or the boiler 154 to maintain the constant water level in the steam tank 153 and boiler 154, thereby enabling stable steam generation. In addition, the amount of water supplied may be adjusted according to the variation in the heat capacity available in the exhaust gas, thereby generating maximum steam.

However, if necessary, it may be configured to supply water directly from the feedback water tank 158 to the sub-economizer 152 or the main economizer 112.

It may include a water supply valve V4 that adjusts the amount of water delivered to each steam tank 153 or boiler 154 according to heat capacity available in the exhaust gas of the auxiliary engine 121. The water supply valve V4 may supply recovered water to the steam tank 153 or the boiler 154 depending on the available heat capacity of the main economizer 112 and the sub-economizer 152. Since there may be some loss in the steam-water circulation path, a water make-up valve that additionally supplies water to the feedback water tank from the outside to maintain the stable water level may be included.

### <Second Embodiment>

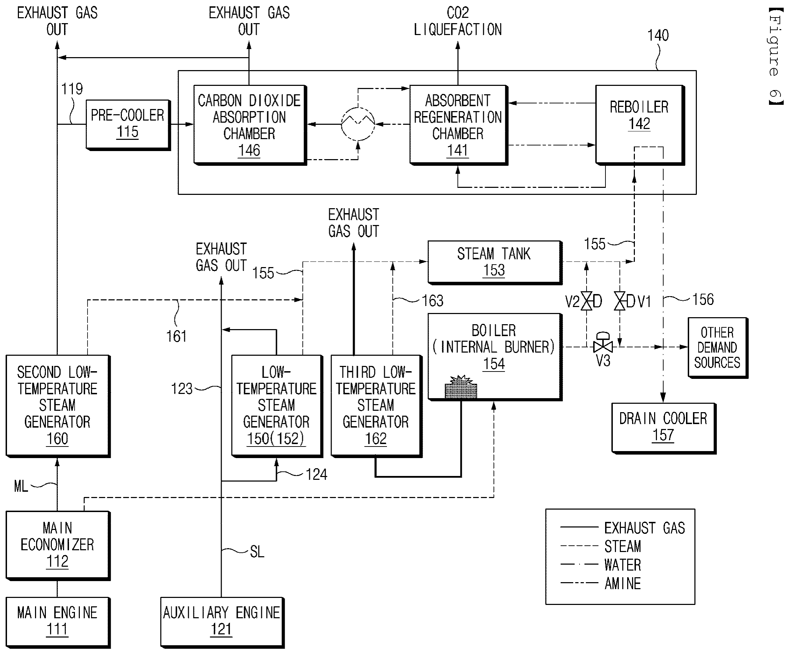

FIG. 6 illustrates a carbon dioxide capture system for a ship according to a second embodiment of the present invention. The carbon dioxide capture system for a ship includes: a carbon dioxide capture device 140 that removes carbon dioxide contained in exhaust gas of a main engine 111; a low-temperature steam generator 150 that generates steam by exchanging heat with exhaust gas of an auxiliary engine 121; a low-temperature steam supply line 155 that supplies steam generated from the low-temperature steam generator 150 to the carbon dioxide capture device 140; a main economizer 112 that is provided on a main engine exhaust line ML connecting between the main engine 111 and the carbon dioxide capture device 140 to generate main steam by exchanging heat with the exhaust gas of the main engine 111; a second low-temperature steam generator 160 that is provided on the main engine exhaust line ML of a rear end of the main economizer 112, and exchanges heat with the main engine exhaust gas passing through the main economizer 112 to generate second steam; and a second low-temperature steam supply line 161 that supplies the second steam generated from the second low-temperature steam generator to the carbon dioxide capture device 140.

After generating the high-temperature steam from the main economizer 112, the temperature of the exhaust gas discharged through the exhaust gas discharge pipe 114 is still high, so it may be cooled to the absorption temperature required by the carbon dioxide capture device 140 in the pre-cooler 115 and then supplied to the carbon dioxide capture device 140. The higher the temperature of the exhaust gas supplied to the pre-cooler 115, the more heat is wasted and the more the amount of seawater supplied should be, which also causes energy loss.

The carbon dioxide capture system according to the second embodiment provides a separate second low-temperature steam generator 160 at the rear end of the main economizer 112 to further lower the temperature of the exhaust gas supplied to the pre-cooler 115, so the waste heat of the main engine exhaust gas passing through the main economizer 112 may be used once more in the second low-temperature steam generator 160. Accordingly, the production amount of low-temperature steam may be increased, and the temperature of the main engine exhaust gas supplied to the pre-cooler 115 may be lowered. Since the temperature of the main engine exhaust gas introduced into the pre-cooler 115 is lowered, the amount of cooling water (seawater) supplied to the pre-cooler 115 may be reduced, thereby improving the efficiency of the system.

The second low-temperature steam generator 160 may be a second economizer, and the low-temperature steam generated from the second low-temperature steam generator 160 may be supplied to the reboiler 142 of the carbon dioxide capture device 140 through the second low-temperature steam supply line 161. As illustrated in FIG. 6, the second low-temperature steam supply line 161 may be joined to the low-temperature steam supply line 155 or may be individually supplied to the reboiler 142 of the carbon dioxide capture device 140.

In addition, the carbon dioxide capture system according to the second embodiment may further include a third low-temperature steam generator 162 that generates third steam by exchanging heat with exhaust gas of boiler generated from the boiler 154; and a third low-temperature steam supply line 163 that supplies the third steam generated from the third low-temperature steam generator 162 to the carbon dioxide capture device 140. In the second embodiment, the separate third low-temperature steam generator 162 is provided so that waste heat of exhaust gas of a boiler generated from boiler 154 may be used to further increase the production amount of low-temperature steam. The third low-temperature steam generator 162 may be a third sub-economizer, and the low-temperature steam generated from the third low-temperature steam generator 162 may be supplied to the reboiler 142 of the carbon dioxide capture device 140 through the third low-temperature steam supply line 163. As illustrated in FIG. 6, the third low-temperature steam supply line 163 may be joined to the low-temperature steam supply line 155 or may be individually supplied to the reboiler 142 of the carbon dioxide capture device 140.

The second embodiment may be applied to a case where the main engine 111 and the auxiliary engine 121 use dual fuel (gas/diesel), but is not limited thereto. In the second embodiment, in addition to the exhaust gas of the auxiliary engine 121, the waste heat of the exhaust gas of the main engine 111 and the boiler 154 may be used, and the low-temperature steam may be generated through each low-temperature steam generator and used for the absorbent regeneration. In the second embodiment, at least a portion of the exhaust gas of the main engine 111 may be supplied to the carbon dioxide capture device 140.

### <Third Embodiment>

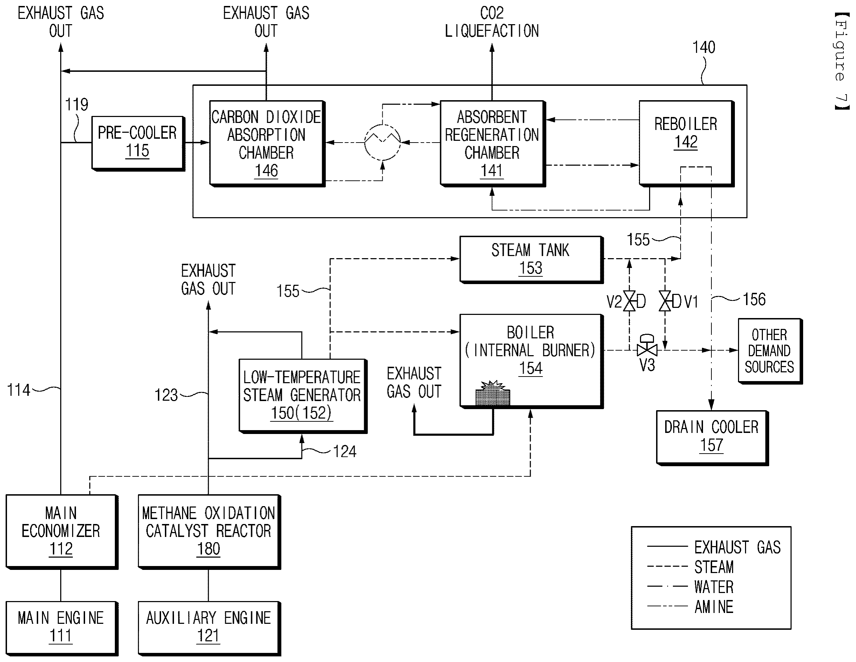

FIG. 7 illustrates a carbon dioxide capture system for a ship according to a third embodiment of the present invention. The carbon dioxide capture system for a ship may include: a carbon dioxide capture device 140 that removes carbon dioxide contained in exhaust gas of a main engine 111; a methane oxidation catalyst reactor 180 that removes methane contained in exhaust gas of an auxiliary engine 121; a low-temperature steam generator 150 that is provided at a rear end of the methane oxidation catalyst reactor 180, and exchanges heat with exhaust gas passing through the methane oxidation catalyst reactor 180 to generate steam; and a low-temperature steam supply line 155 that supplies the steam generated from the low-temperature steam generator 150 to the carbon dioxide capture device 140.

The third embodiment is illustrated in FIG. 7 as having a methane oxidation catalyst reactor 180 added between the auxiliary engine 121 and the low-temperature steam generator 150 in the first embodiment, but a methane oxidation catalyst reactor 180 may also be added between the auxiliary engine 121 and the low-temperature steam generator 150 in the same manner in FIG. 6 (the second embodiment). In the third embodiment, waste heat of high-temperature exhaust gas generated while passing through the methane oxidation catalyst reactor 180 may be used to generate low-temperature steam from the low-temperature steam generator 150.

In addition, in the third embodiment, the methane oxidation catalyst reactor 180 may be provided on the exhaust gas line of the auxiliary engine 121, and the carbon dioxide capture device 140 may be provided on the exhaust gas line of the main engine 111. Since the methane oxidation catalyst is expensive, it is used only in a low-pressure auxiliary engine (power generation engine) and not used in a high-pressure main engine (propulsion engine), thereby reducing the cost of the methane oxidation catalyst.

The third embodiment may be applied to a case where the main engine 111 and the auxiliary engine 121 uses dual fuel (gas/diesel), but is not limited thereto. The third embodiment uses waste heat of the exhaust gas of the auxiliary engine 121, but by using the waste heat of the high-temperature exhaust gas that has passed through the methane oxidation catalyst reactor 180, a sufficient heat source for generating low-temperature steam may be provided. In the third embodiment, at least a portion of the exhaust gas of the main engine 111 may be supplied to the carbon dioxide capture device 140.

### <Fourth Embodiment>

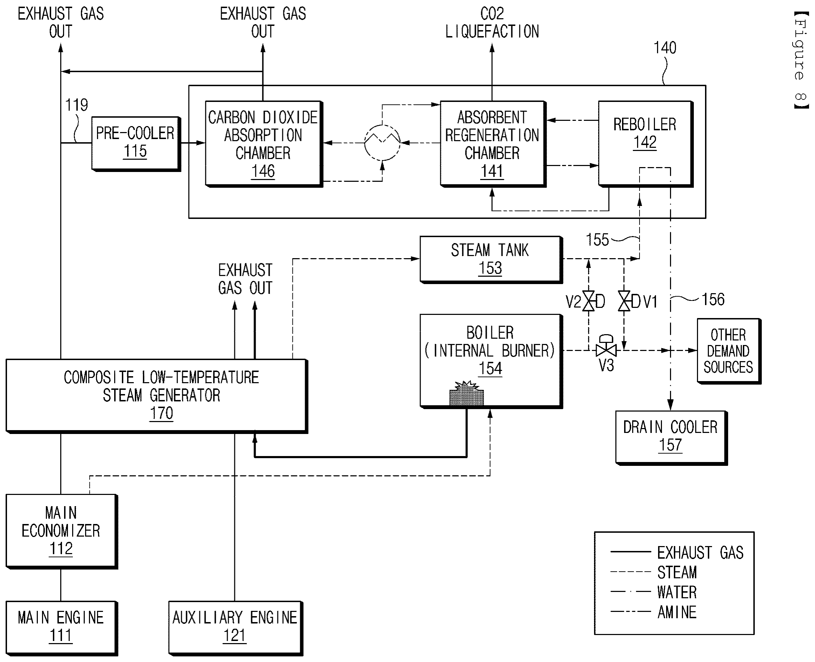

FIG. 8 illustrates a carbon dioxide capture system for a ship according to a fourth embodiment of the present invention. The carbon dioxide capture system for a ship may include: a carbon dioxide capture device 140 that removes carbon dioxide contained in exhaust gas of a main engine 111; a main economizer 112 that generates main steam by exchanging heat with exhaust gas of the main engine 111; a composite low-temperature steam generator 170 that receives the exhaust gas of the main engine passing through the main economizer 112 and the exhaust gas of the auxiliary engine together to generate steam; and a low-temperature steam supply line 155 that supplies the steam generated from the composite low-temperature steam generator 170 to the carbon dioxide capture device 140.

In the fourth embodiment, the main engine exhaust gas passing through the main economizer 112 and the exhaust gas of the auxiliary engine 121 may be supplied together to the composite low-temperature steam generator 170 to generate low-temperature steam. The composite low-temperature steam generator 170 may be a composite sub-economizer. The waste heat of the main engine exhaust gas discharged from the main economizer 112 may be used once more in the composite low-temperature steam generator 170 to generate low-temperature steam together with the exhaust gas of the auxiliary engine 121. Therefore, the amount of low-temperature steam generated may be increased compared to generating low-temperature steam only with the exhaust gas of the auxiliary engine 121.

In addition, in the fourth embodiment, at least a portion of the exhaust gas of the boiler generated from the boiler 154 may be supplied to the composite low-temperature steam generator 170. Therefore, the waste heat of the exhaust gas of the boiler discharged from the boiler 154 may also be used to generate the low-temperature steam in the composite low-temperature steam generator 170.

The fourth embodiment may be applied to a case where the main engine 111 and the auxiliary engine 121 use dual fuel (gas/diesel), but is not limited thereto. In the fourth embodiment, in addition to the exhaust gas of the auxiliary engine 121, the waste heat of the exhaust gas of the main engine 111 and the boiler 154 may be used to generate the low-temperature steam through a single composite low-temperature steam generator 170 and regenerate the absorbent. In the fourth embodiment, at least a portion of the exhaust gas of the main engine 111 may be supplied to the carbon dioxide capture device 140.

### <Fifth Embodiment>

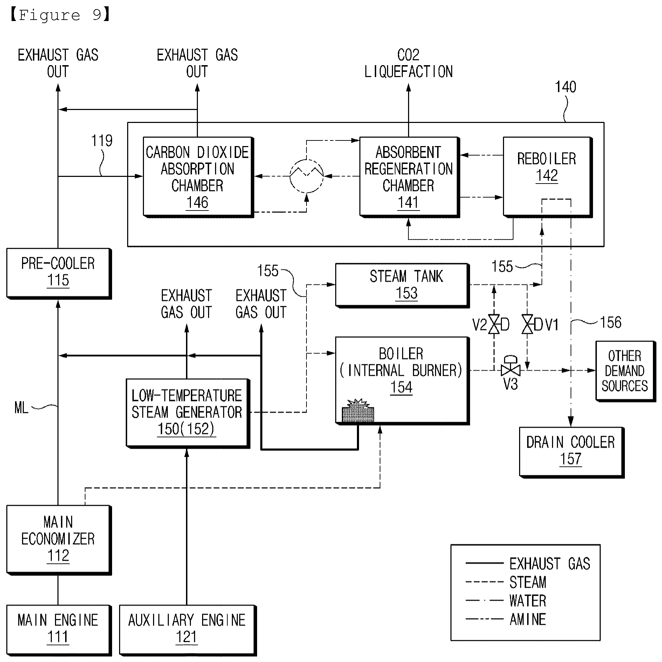

FIG. 9 illustrates a carbon dioxide capture system for a ship according to a fifth embodiment of the present invention. The carbon dioxide capture system for a ship includes: a carbon dioxide capture device 140 that removes carbon dioxide contained in exhaust gas of a main engine 111; a low-temperature steam generator 150 that generates steam by exchanging heat with exhaust gas of an auxiliary engine 121; and a low-temperature steam supply line 155 that supplies steam generated from the low-temperature steam generator 150 to the carbon dioxide capture device 140, wherein at least a portion of the exhaust gas of the auxiliary engine that has passed through the low-temperature steam generator 150 may be joined to a main engine exhaust line ML connecting between the main engine 111 and the carbon dioxide capture device 140.

In addition, the carbon dioxide capture system for a ship further includes the main economizer 112 provided in a main engine exhaust line ML to generate main steam by exchanging heat with the exhaust gas of the main engine, and at least a portion of the exhaust gas of the auxiliary engine passing through the low-temperature steam generator 150 may be joined to the main engine exhaust line ML of the rear end of the main economizer 112. The joining position of the exhaust gas of the auxiliary engine that has passed through the low-temperature steam generator 150 is specified.

In the case of the fifth embodiment, since the exhaust gas of the auxiliary engine 121 contains more harmful substances than LNG, it may be combined with the exhaust gas of the main engine 111 to remove the carbon dioxide and then discharged. The exhaust gas that has passed through the low-temperature steam generator 150 has different contents of SOx, etc., depending on the type of fuel, and when it does not satisfy the emission standard, it may be supplied to the pre-cooler 115 to be discharged into the atmosphere through a sulfuric acid removal unit or a carbon dioxide removal unit by joining the main engine exhaust line ML.

In this case, the exhaust gas passing through the low-temperature steam generator 150 may be combined with the exhaust gas passing through the main economizer 112 and supplied to the carbon dioxide capture device 140. That is, at least a portion of the exhaust gas of the auxiliary engine passing through the low-temperature steam generator 150 may be joined to the main engine exhaust line ML and supplied to the carbon dioxide capture device 140. Therefore, in the case of the fifth embodiment, at least a portion of the carbon dioxide contained in the exhaust gas of not only the main engine 111 but also the auxiliary engine 121 may be removed, thereby satisfying the required carbon dioxide emission standard.

In addition, at least a portion of the exhaust gas of the boiler generated from the boiler 154 may be joined to the main engine exhaust line ML of the rear end of the main economizer 112. As described in the first embodiment, the boiler 154 may generate steam by burning additional fuel independently of the engine, so at least a portion of the exhaust gas of the boiler generated at this time may be joined to the main engine exhaust line ML and supplied to the carbon dioxide capture device 140. Therefore, in the case of the fifth embodiment, at least a portion of the carbon dioxide contained in the exhaust gas discharged from the main engine 111 and the auxiliary engine 121 as well as the boiler 154 may be removed to satisfy the required carbon dioxide emission standard.

Additionally, the second low-temperature steam generator 160 of the second embodiment may be configured to be provided on the main engine exhaust line ML of the rear end of the main economizer 112 so as to generate second steam by exchanging heat with the main engine exhaust gas passing through the main economizer 112. In addition, the third low-temperature steam generator 162 of the second embodiment may be configured to generate third steam by exchanging heat with the exhaust gas of the boiler generated from the boiler 154.

The fifth embodiment may be applied to a case where the main engine 111 and the auxiliary engine 121 use liquid fuel, but is not limited thereto. Examples of the liquid fuel may include, but are not limited to, diesel fuel (e.g., heavy fuel oil (HFO), very low sulfur marine fuel oil (VLSFO), marine gas oil (MGO)), methanol, etc. In the fifth embodiment, the low-temperature steam may be generated by using the waste heat of the exhaust gas of the auxiliary engine 121 and used for the absorbent regeneration. In the fifth embodiment, at least a portion of the exhaust gas of the main engine 111 as well as at least a portion of the exhaust gas of the auxiliary engine 121 and the boiler 154 may be supplied to the carbon dioxide capture device 140.

### <Sixth Embodiment>

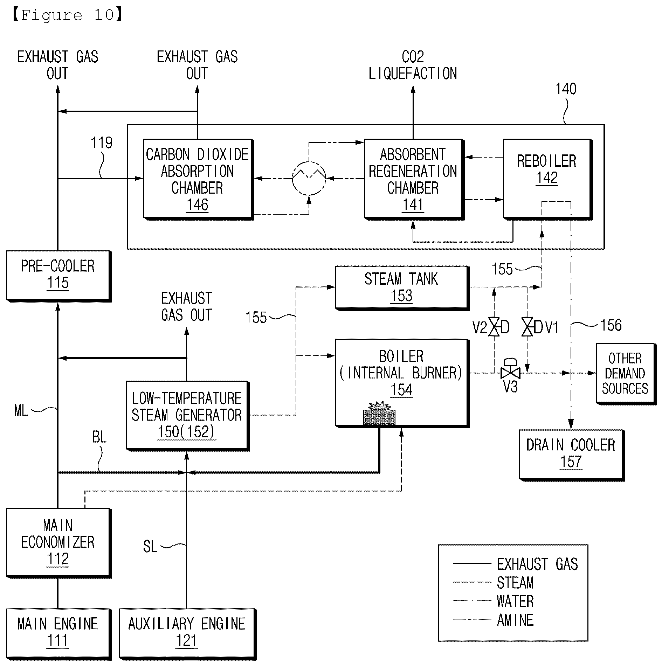

FIG. 10 illustrates a carbon dioxide capture system for a ship according to a sixth embodiment of the present invention. The carbon dioxide capture system for a ship includes: a carbon dioxide capture device 140 that removes carbon dioxide contained in exhaust gas of a main engine 111; a low-temperature steam generator 150 that generates steam by exchanging heat with exhaust gas of an auxiliary engine 121; a low-temperature steam supply line 155 that supplies steam generated from the low-temperature steam generator 150 to the carbon dioxide capture device 140; a main economizer 112 that is provided on a main engine exhaust line ML connecting between the main engine 111 and the carbon dioxide capture device 140, and exchanges heat with exhaust gas of the main engine 111 to generate main steam; and a branch line BL that is branched from the main engine exhaust line ML at the rear end of the main economizer 112 and connected to an exhaust line SL connecting between the auxiliary engine 121 and the low-temperature steam generator 150, wherein at least a portion of the main engine exhaust gas passing through the main economizer 112 may be supplied to the low-temperature steam generator 150 through a branch line BL.

After generating the high-temperature steam from the main economizer 112, the temperature of the exhaust gas discharged through the exhaust gas discharge pipe 114 is still high, so it may be cooled to the absorption temperature required by the carbon dioxide capture device 140 in the pre-cooler 115 and then supplied to the carbon dioxide capture device 140. The higher the temperature of the exhaust gas supplied to the pre-cooler 115, the more heat is wasted and the more the amount of seawater supplied should be, which also causes energy loss.

The carbon dioxide capture system according to the sixth embodiment may include a branch line BL that supplies at least a portion of the exhaust gas passing through the main economizer 112 to a low-temperature steam generator 150 in order to further lower the temperature of the exhaust gas supplied to the pre-cooler 115. That is, the waste heat of the exhaust gas discharged from the main economizer 112 may be used once more in the low-temperature steam generator 150, thereby increasing the production amount of low-temperature steam in the low-temperature steam generator 150 and lowering the temperature of the exhaust gas supplied to the carbon dioxide capture device 140.

Depending on the amount of low-temperature steam generated from the low-temperature steam generator 150, the exhaust gas discharged from the main economizer 112 may be selectively supplied to the low-temperature steam generator 150 or directly supplied to the pre-cooler 115.

In addition, at least a portion of the exhaust gas of the boiler generated from the boiler 154 may be joined to an auxiliary engine exhaust line SL and supplied to the low-temperature steam generator 150. Therefore, the waste heat of the exhaust gas of the boiler generated from the boiler 154 may also be used to generate low-temperature steam in the low-temperature steam generator 150.

In addition, as in the fifth embodiment, at least a portion of the integrated exhaust gas passing through the low-temperature steam generator 150 may be joined to the main engine exhaust line ML of the rear end of the main economizer 112. Here, the integrated exhaust gas may be a mixture of the main engine exhaust gas of the main engine 111, the exhaust gas of the auxiliary engine of the auxiliary engine 121, and the exhaust gas of the boiler of the boiler 154. At least a portion of the integrated exhaust gas may be supplied to the carbon dioxide capture device 140 to satisfy the required carbon dioxide emission standard.

The sixth embodiment may be applied to a case where the main engine 111 and the auxiliary engine 121 use liquid fuel, but is not limited thereto. Examples of the liquid fuel may include, but are not limited to, diesel fuel (e.g., heavy fuel oil (HFO), very low sulfur marine fuel oil (VLSFO), marine gas oil (MGO)), methanol, etc. The sixth embodiment may generate low-temperature steam by using waste heat from exhaust gas of the main engine 111 and boiler 154 in addition to exhaust gas of the auxiliary engine 121 and may be used for absorbent regeneration. In the sixth embodiment, at least a portion of the exhaust gas of the main engine 111 as well as at least a portion of the exhaust gas of the auxiliary engine 121 and the boiler 154 may be supplied to the carbon dioxide capture device 140.

The first to fourth embodiments are different in that they are embodiments when using dual fuel, and the fifth and sixth embodiments are embodiments when using liquid fuel (examples of liquid fuel include, but are not limited to, diesel fuel (e.g., heavy fuel oil (HFO), very low sulfur marine fuel oil (VLSFO), marine gas oil (MGO)), methanol, etc.), but they are common in that the exhaust gas of the auxiliary engine 121 is used as the basic heat source for generating low-temperature steam, and the carbon dioxide capture device 140 is arranged in the exhaust gas line of the main engine 111. The configurations of each embodiment are not applied exclusively, and may be configured in combination, respectively.

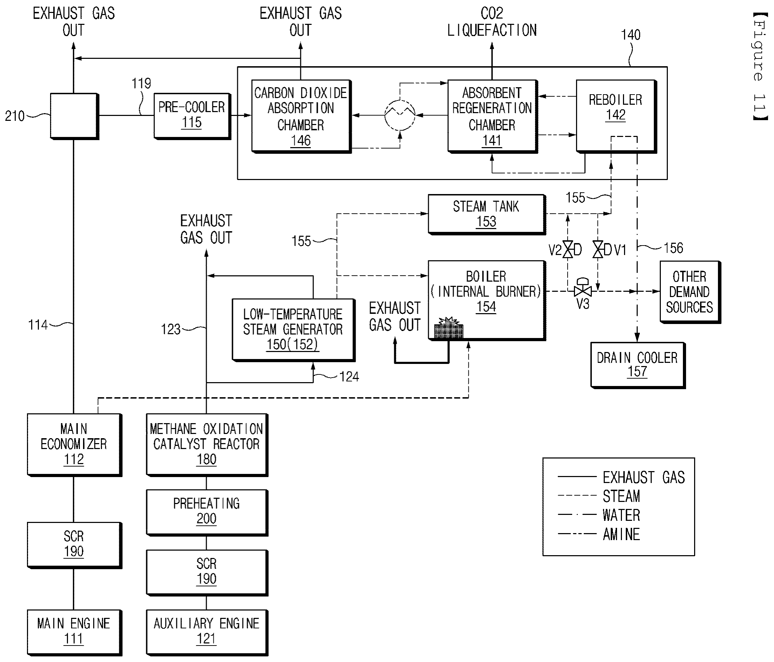

FIG. 11 is one of the optimal embodiments of the present invention, and based on FIG. 7 of the third embodiment, a selective catalytic reduction device (SCR) 190 may be added between the main engine 111 and the main economizer 112, and the SCR 190 or the pre-heating 200 may be added between the auxiliary engine 121 and the methane oxidation catalyst reactor 180. In addition, the SCR 190 may be installed at the rear end of the methane oxidation catalyst reactor 180 or may be installed in parallel. In addition, a damper 210 may be provided at a point where the exhaust gas of the main engine 111 is branched to the carbon dioxide capture device 140. The present embodiment may be applied to a case where the main engine 111 and the auxiliary engine 121 use dual fuel (gas/diesel), but is not limited thereto.

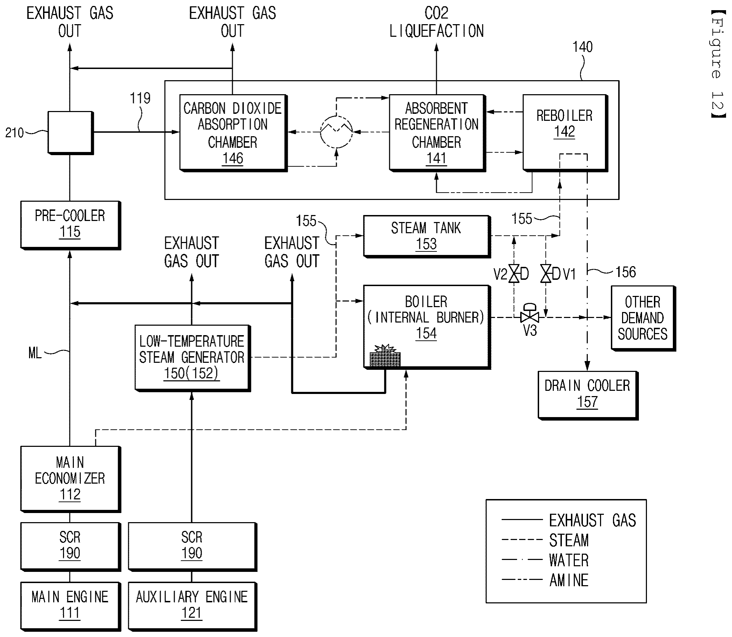

FIG. 12 is another one of the optimal embodiments of the present invention, and based on FIG. 9 of the fifth embodiment, the SCR 190 may be added between the main engine 111 and the main economizer 112, and the SCR 190 may be added between the auxiliary engine 121 and the low-temperature steam generator 150. In addition, a damper 210 may be provided at a point where the exhaust gas of the main engine 111 is branched to the carbon dioxide capture device 140. The present embodiment may be applied to a case where the main engine 111 and the auxiliary engine 121 use liquid fuel, but is not limited thereto.

The above description is merely an example of the technical idea of the present invention, and those skilled in the art may make various modifications and alterations without departing from the essential characteristics of the present invention. Accordingly, the embodiments disclosed in the present invention are not to limit the technical idea of the present invention, but to describe the technical idea of the present invention. The scope of the present invention is not limited to these exemplary embodiments. The protection scope of the present invention should be interpreted by the claims below and all the technical ideas within a scope equivalent thereto should be interpreted as being included in the scope of the present invention.

## Claims

1. A carbon dioxide capture system for a ship, comprising:
a carbon dioxide capture device that removes carbon dioxide contained in exhaust gas of a main engine;
a low-temperature steam generator that exchanges heat with exhaust gas of an auxiliary engine to generate steam; and
a low-temperature steam supply line that supplies the steam generated from the low-temperature steam generator to the carbon dioxide capture device.

2. The carbon dioxide capture system of claim 1, further comprising:
a methane oxidation catalyst reactor that is provided between the auxiliary engine and the low-temperature steam generator to remove methane contained in the exhaust gas of the auxiliary engine,
wherein the low-temperature steam generator exchanges heat with the exhaust gas passing through the methane oxidation catalyst reactor to generate the steam.

3. The carbon dioxide capture system of claim 1, wherein the low-temperature steam supply line is provided with a steam tank for separating liquid water within the steam.

4. The carbon dioxide capture system of claim 1, wherein the low-temperature steam generator is a sub-economizer, and
the steam is low-temperature steam having a temperature condition of 100°C or higher and less than 165°C under a pressure condition of less than 6 barg.

5. The carbon dioxide capture system of claim 1, comprising:
a first steam valve that is provided on the low-temperature steam supply line and controls the amount of steam supplied to the carbon dioxide capture device.

6. The carbon dioxide capture system of claim 1, comprising:
a main economizer that exchanges heat with the exhaust gas of the main engine to generate main steam;
a boiler that receives the main steam preheated by the main economizer to generate high-temperature boiler steam; and
a second steam valve that is provided on an additional supply line supplying the high-temperature boiler steam generated from the boiler to the carbon dioxide capture device to convert the high-temperature boiler steam into low-temperature steam.

7. The carbon dioxide capture system of claim 1, further comprising:
a main economizer that is provided on a main engine exhaust line connecting between the main engine and the carbon dioxide capture device, and exchanges heat with the exhaust gas of the main engine to generate main steam;
a second low-temperature steam generator that is provided on the main engine exhaust line at a rear end of the main economizer, and exchanges heat with the exhaust gas of the main engine passing through the main economizer to generate second steam; and
a second low-temperature steam supply line that supplies the second steam generated from the second low-temperature steam generator to the carbon dioxide capture device.

8. The carbon dioxide capture system of any one of preceding claims, wherein the main engine or the auxiliary engine uses dual fuel.

9. A carbon dioxide capture system for a ship, comprising:
a carbon dioxide capture device that removes carbon dioxide contained in exhaust gas of a main engine;
a main economizer that exchanges heat with the exhaust gas of the main engine to generate main steam;
a composite low-temperature steam generator that receives the exhaust gas of the main engine passing through the main economizer and the exhaust gas of the auxiliary engine together to generate steam; and
a low-temperature steam supply line that supplies the steam generated from the composite low-temperature steam generator to the carbon dioxide capture device.

10. The carbon dioxide capture system of claim 9, further comprising:
a boiler that receives the main steam preheated by the main economizer to generate high-temperature boiler steam,
wherein at least a portion of exhaust gas of a boiler generated from the boiler is supplied to the composite low-temperature steam generator.

11. A carbon dioxide capture system for a ship, comprising:
a carbon dioxide capture device that removes carbon dioxide contained in exhaust gas of a main engine;
a low-temperature steam generator that exchanges heat with exhaust gas of an auxiliary engine to generate steam; and
a low-temperature steam supply line that supplies the steam generated from the low-temperature steam generator to the carbon dioxide capture device,
wherein at least a portion of the exhaust gas of the auxiliary engine passing through the low-temperature steam generator is joined to a main engine exhaust line connecting between the main engine and the carbon dioxide capture device.

12. The carbon dioxide capture system of claim 11, further comprising:
a main economizer that is provided on the main engine exhaust line, and exchanges heat with the exhaust gas of the main engine to generate main steam,
wherein at least a portion of the exhaust gas of the auxiliary engine passing through the low-temperature steam generator is joined to the main engine exhaust line at a rear end of the main economizer.

13. The carbon dioxide capture system of claim 12, further comprising:
a boiler that receives the main steam preheated by the main economizer to generate high-temperature boiler steam,
wherein at least a portion of the exhaust gas of the boiler generated from the boiler is joined to the main engine exhaust line at the rear end of the main economizer.

14. The carbon dioxide capture system of claim 11, comprising:
a main economizer that is provided on the main engine exhaust line, and exchanges heat with the exhaust gas of the main engine to generate main steam; and
a branch line that is branched from the main engine exhaust line at the rear end of the main economizer and connected to an auxiliary engine exhaust line connecting between the auxiliary engine and the low-temperature steam generator,
wherein at least a portion of the main engine exhaust gas passing through the main economizer is supplied to the low-temperature steam generator through the branch line.

15. The carbon dioxide capture system of any one of preceding claims, wherein the main engine or the auxiliary engine uses liquid fuel.
